# EUROPEAN PATENT SPECIFICATION

(11) **EP 2 662 966 B1**
(45) Date of publication and mention of the grant of the patent: **12.09.2018**
(21) Application number: 12840833.3
(22) Date of filing: 30.10.2012
(51) Int. Cl.: H02M 7/00, H02M 7/487

(54) **THREE-LEVEL INVERTER**
DREISTUFIGER UMRICHTER
ONDULEUR À TROIS NIVEAUX

(30) Priority: 13.03.2012 CN 201210064748
(43) Date of publication of application: 13.11.2013
(73) Proprietor: Huawei Technologies Co., Ltd., Longgang District Shenzhen, Guangdong 518129 (CN)
(72) Inventor: HE, Bo, Shenzhen, Guangdong 518129 (CN)
(74) Representative: Epping - Hermann - Fischer
(86) International application number: PCT/CN2012/083717
(87) International publication number: WO 2013/135050

(56) References cited:
- CN-A- 101 051 794
- CN-A- 102 064 718
- CN-A- 102 064 718
- CN-A- 102 611 343
- CN-Y- 201 369 673
- US-A1- 2003 206 423
- US-A1- 2011 013 438
- MINIBOCK J ET AL: "Comparative theoretical and experimental evaluation of bridge leg topologies of a three-phase three-level unity power factor rectifier", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 3, 17 June 2001 (2001-06-17), pages 1641-1646, XP010559463, DOI: 10.1109/PESC.2001.954354 ISBN: 978-0-7803-7067-8

## Description

### FIELD OF THE INVENTION

The present invention relates to the field of power electronics technologies, and in particular, to a tri-level inverter.

### BACKGROUND OF THE INVENTION

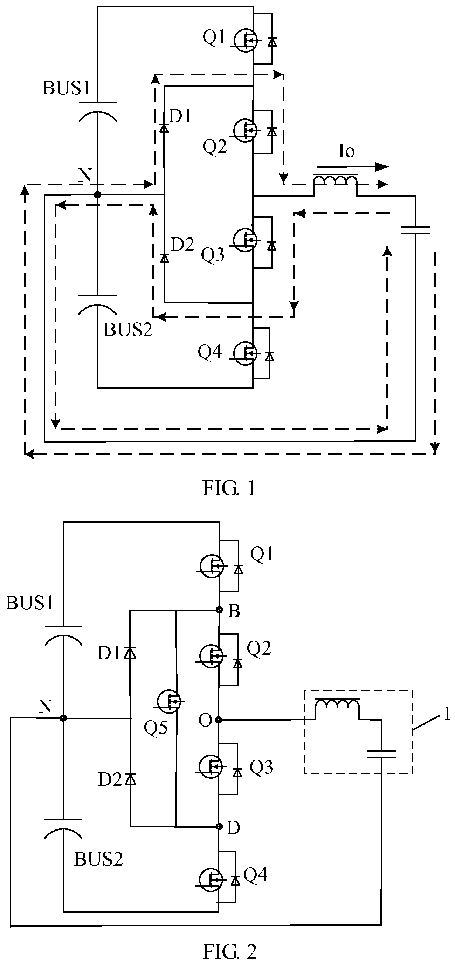

A tri-level inverter is a pulse width modulation (Pulse Width Modulation, PWM) circuit based on three fixed levels and is widely applied in the field of power electronics. Currently, one of the most common tri-level inverters is a neutral point clamping (Neutral Point Clamping, NPC) tri-level inverter shown in FIG. 1, and node N is a connection point between two direct current power supplies BUS1 and BUS2. When an output voltage of the inverter is clamped to a voltage of the node N, an output current Io needs to freewheel through a diode D1 or a diode D2. However, because of unilateral conductivity of a diode, the output current Io can only freewheel through one path corresponding to the diode D1 or D2. Therefore, the circuit has a large loss and low efficiency, and is not good for heat dissipation. CN 102064718A discloses a universal power supply device which can select different power transformation modules according to different input voltage values, so as to enhance the reliability of the power supply device.

CN 101 051 794 A relates to a control device including a control circuit, time delay circuit, and drive circuit of a gate electrode of a power tube, as well as a protective circuit. Being connected to a previous stage of the time delay circuit, the protective circuit is used for locking out a control signal of the previous stage of the time delay circuit.

The objective technical problem to be solved is how to improve the efficiency and facilitate heat dissipation of a tri-level inverter.

### SUMMARY OF THE INVENTION

An embodiment of the present invention provides a tri-level inverter, which reduces the circuit loss, improves the efficiency and facilitates heat dissipation.

To solve the above technical problems, the embodiment of the present invention adopts the following technical solutions.

A tri-level inverter is provided, which includes: a first direct current source and a second direct current source, where a joint where a negative terminal of the first direct current source and a positive terminal of the second direct current source are connected is used as a first node; a first switch tube, a second switch tube, a third switch tube, and a fourth switch tube that are sequentially connected in series between a positive terminal of the first direct current source and a negative terminal of the second direct current source, where a joint where the first switch tube and the second switch tube are connected is a second node, a joint where the second switch tube and the third switch tube are connected is a third node, and a joint where the third switch tube and the fourth switch tube are connected is a fourth node; a first diode, where the anode of the first diode is connected to the first node and the cathode of the first diode is connected to the second node; a second diode, where the cathode of the second diode is connected to the first node and the anode of the second diode is connected to the fourth node; and a filter unit, where two ends of the filter unit are connected to the first node and the third node, respectively; the tri-level inverter further including:
a fifth switch tube, where the fifth switch tube is connected between the second node and the fourth node.

In the tri-level inverter provided by the embodiment of the present invention, in the process of clamping an output voltage to a voltage of the first node, when an output current of the third node is a positive current, a direction of an actual current is the same as that of the output current. That is, the actual current freewheels from the first node and sequentially through the first diode, the fifth switch tube, and the third switch tube to the third node, and the actual current may also freewheel from the first node and sequentially through the first diode and the second switch tube to the third node, so as to enable the third node to output the voltage of the first node. Because two freewheeling paths exist, that is, the third switch tube and the fifth switch tube that are connected in series and the second switch tube are connected in parallel for current freewheeling, compared with the prior art in which only a single freewheeling path exists, the utilization rate of the switch tubes is improved, and the current and loss are apportioned among more switch tubes, thereby improving the efficiency of a circuit and facilitating heat dissipation. When the output current of the third node is a negative current, a direction of an actual current is opposite to that of the output current. That is, the actual current freewheels from the third node and sequentially through the second switch tube, the fifth switch tube, and the second diode to the first node, and the actual current may also freewheel from the third node and sequentially through the third switch tube and the second diode to the first node, so as to enable the third node to output the voltage of the first node. Because two freewheeling paths exist, that is, the second switch tube and fifth switch tube that are connected in series and the third switch tube are connected in parallel for current freewheeling, compared with the prior art in which only a single freewheeling path exists, the utilization rate of the switch tubes is improved, and the current and loss are apportioned among more switch tubes, thereby improving the efficiency of the circuit and facilitating heat dissipation.

### BRIEF DESCRIPTION OF THE DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts.
FIG. 1 is a schematic structural diagram of a tri-level inverter in the prior art;
FIG. 2 is a schematic structural diagram of a tri-level inverter in an embodiment of the present invention;
FIG. 3 is a schematic diagram when an output current is a positive current in a process of clamping an output voltage to a voltage of a first node in FIG. 2;
FIG. 4 is a schematic diagram when an output current is a negative current in a process of clamping an output voltage to a voltage of a first node in FIG. 2;
FIG. 5 is a schematic diagram with a fifth switch tube being a MOSFET in FIG. 2;
FIG. 6 is a schematic diagram with a fifth switch tube being an IGBT in FIG. 2.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

As shown in FIG. 2, an embodiment of the present invention provides a tri-level inverter, which includes: a first direct current source BUS1 and a second direct current source BUS2, where a joint where a negative terminal of the first direct current source BUS1 and a positive terminal of the second direct current source BUS2 are connected is used as a first node N; a first switch tube Q1, a second switch tube Q2, a third switch tube Q3, and a fourth switch tube Q4 that are sequentially connected in series between a positive terminal of the first direct current source BUS1 and a negative terminal of the second direct current source BUS2, where a joint where the first switch tube Q1 and the second switch tube Q2 are connected is a second node B, a joint where the second switch tube Q2 and the third switch tube Q3 are connected is a third node O, a joint where the third switch tube Q3 and the fourth switch tube Q4 are connected is a fourth node D; a first diode D1, where the anode of the first diode D1 is connected to the first node N and the cathode of the first diode D1 is connected to the second node B; a second diode D2, where the cathode of the second diode D2 is connected to the first node N and the anode of the second diode D2 is connected to the fourth node D; a filter unit 1, where two ends of the filter unit 1 are connected to the first node N and the third node O, respectively; and a fifth switch tube Q5, where the fifth switch tube Q5 is connected between the second node B and the fourth node D.

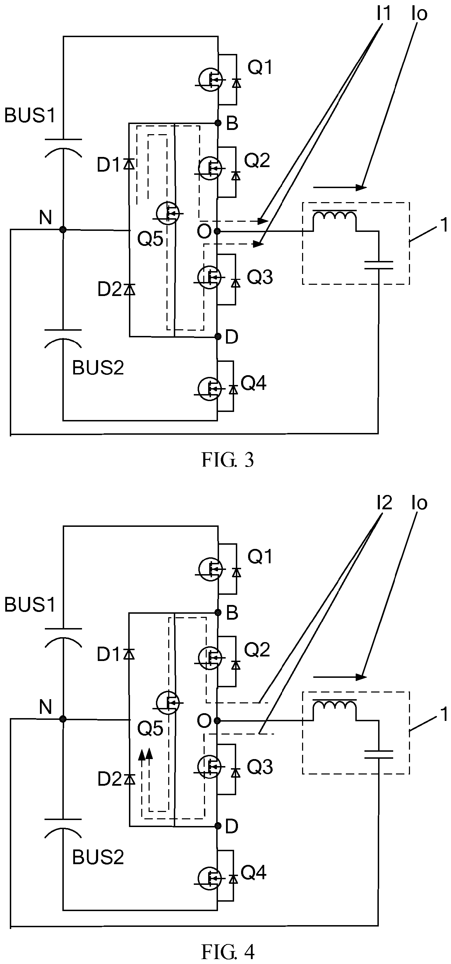

In the tri-level inverter, the first direct current source BUS1 and the second direct current source BUS2 may be considered as constant voltage sources, an output node is the third node O, and neutral point clamping freewheeling diodes are the first diode D1 and the second diode D2. When the tri-level inverter is to clamp an output voltage at a voltage of the first node N, the first switch tube Q1 and the fourth switch tube Q4 may be turned off, and the second switch tube Q2, the third switch tube Q3, and the fifth switch tube Q5 may be conducted. In this case, the output voltage of the third node O and the voltage of the first node N are equal in value. Specifically, as shown in FIG. 3, when an output current Io of the third node O is a positive current, a direction of an actual current I1 is the same as that of the output current Io. That is, the actual current I1 freewheels from the first node N and sequentially through the first diode D1, the fifth switch tube Q5, and the third switch tube Q3 to the third node O, and the actual current I1 also freewheels from the first node N and sequentially through the first diode D1 and the second switch tube Q2 to the third node O, so as to enable the third node O to output the voltage of the first node N. Because there are two freewheeling paths exist, that is, the third switch tube Q3 and fifth switch tube Q5 that are connected in series and the second switch tube Q2 are connected in parallel for current freewheeling, compared with the prior art in which only a single freewheeling path exists, the utilization rate of the switch tubes is improved, and the current and loss are apportioned among more switch tubes, thereby improving the efficiency of a circuit and facilitating heat dissipation. As shown in FIG. 4, when the output current Io of the third node O is a negative current, a direction of an actual current I2 is opposite to that of the output current Io. That is, the actual current I2 freewheels from the third node O and sequentially through the second switch tube Q2, the fifth switch tube Q5, and the second diode D2 to the first node N, and the actual current I2 also freewheels from the third node O and sequentially through the third switch tube Q3 and the second diode D2 to the first node N, so as to enable the third node O to output the voltage of the first node N. Because there are two freewheeling paths exist, that is, and the second switch tube Q2 and fifth switch tube Q5 that are connected in series and the third switch tube Q3 are connected in parallel for current freewheeling, compared with the prior art in which only a single freewheeling path exists, the utilization rate of the switch tubes is improved, and the current and loss are apportioned among more switch tubes, thereby improving the efficiency of the circuit and facilitating heat dissipation. It should be noted that arrows in FIG. 3 and FIG. 4 are exemplary of the directions of currents.

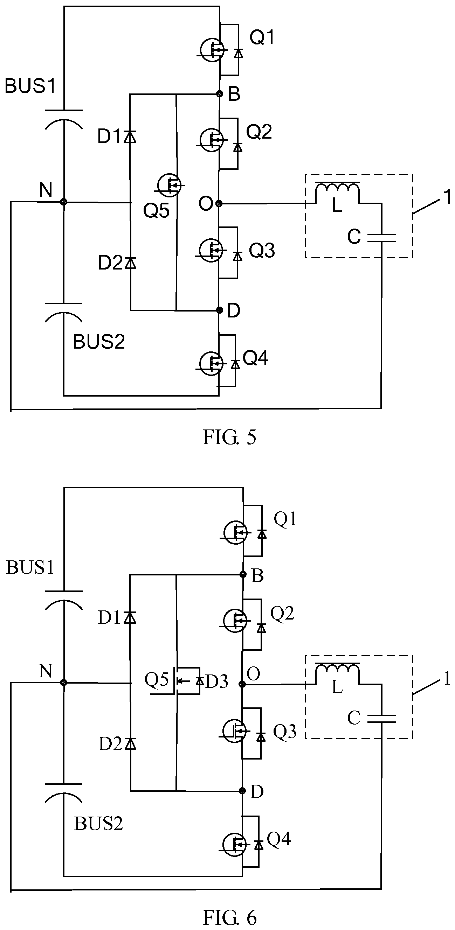

As shown in FIG. 5, further, the filter unit 1 includes an inductor L and a capacitor C, where one end of the inductor L is connected to the third node O, one end of the capacitor C is connected to the other end of the inductor L, and the other end of the capacitor C is connected to the first node N. The fifth switch tube Q5 may be a field effect transistor, for example, a metal oxide semiconductor field effect transistor (Metal-Oxide-Semiconductor Field-Effect Transistor, MOSFET), where its drain is connected to the second node B, its source is connected to the fourth node D, and its gate is connected to a control signal for controlling on/off of the fifth switch tube Q5. Alternatively, as shown in FIG. 6, the fifth switch tube Q5 may be a bipolar transistor, for example, an insulated gate bipolar transistor (Insulated Gate Bipolar Transistor, IGBT), where its collector is connected to the second node B, and its emitter is connected to the fourth node D. Because a MOSFET has a parasitic diode integrated internally, but an IGBT has no parasitic diode, so the tri-level inverter may further include: an anti-parallel diode D3 connected between the emitter and the collector of the fifth switch tube Q5, where the anode of the anti-parallel diode D3 is connected to the emitter of the fifth switch tube Q5 and the cathode of the anti-parallel diode D3 is connected to the collector of the fifth switch tube Q5, to protect the IGBT from being broken down by a reverse voltage. A specific working principle is the same as that in the above embodiment, and details are not described herein again.

It should be noted that the first switch tube Q1, the second switch tube Q2, the third switch tube Q3, and the fourth switch tube Q4 in the above embodiment may be MOSFETs, where the drain of the first switch tube Q1 is connected to the positive terminal of the first direct current source BUS1, a joint where the drain of the second switch tube Q2 and the source of the first switch tube Q1 are connected is used as the second node B, a joint where the drain of the third switch tube Q3 and the source of the second switch tube Q2 are connected is used as the third node O, a joint where the drain of the fourth switch tube Q4 and the source of the third switch tube Q3 are connected is used as the fourth node D, and the source of the fourth switch tube Q4 is connected to the negative terminal of the second direct current source BUS2. Each switch tube described above has an anti-parallel diode, where the anode of the anti-parallel diode is connected to the source of the switch tube, and the cathode of the anti-parallel diode is connected to the drain of the switch tube. Optionally, the first switch tube Q1, the second switch tube Q2, the third switch tube Q3, and the fourth switch tube Q4 may also be IGBTs, where the collector of the first switch tube Q1 is connected to the positive terminal of the first direct current source BUS1, a joint where the collector of the second switch tube Q2 and the emitter of the first switch tube Q1 are connected is used as the second node B, a joint where the collector of the third switch tube Q3 and the emitter of the second switch tube Q2 are connected is used as the third node O, a joint where the collector of the fourth switch tube Q4 and the emitter of the third switch tube Q3 are connected is used as the fourth node D, and the emitter of the fourth switch tube Q4 is connected to the negative terminal of the second direct current source BUS2. Each switch tube described above has an anti-parallel diode, where the anode of the anti-parallel diode is connected to the emitter of the switch tube, and the cathode of the anti-parallel diode is connected to the collector of the switch tube. Optionally, the first switch tube Q1, the second switch tube Q2, the third switch tube Q3, and the fourth switch tube Q4 may also be other semiconductor switching components, and each of the four switch tubes has an anti-parallel diode integrated internally or an anti-parallel diode is externally connected in parallel to each of the four switch tubes.

In the embodiment of the present invention, by adding an additional fifth switch tube only, it is implemented that when the output voltage of the tri-level inverter is clamped to the voltage of the first node, two freewheeling paths exist. Compared with the prior art in which only a single freewheeling path exists, the utilization rate of the switch tubes is improved, and the current and loss are apportioned among more switch tubes, thereby improving the efficiency of the circuit and facilitating heat dissipation.

Through the foregoing description of the embodiments, it is clear to persons skilled in the art that the present invention may be implemented by software plus necessary general hardware, and definitely, may also be implemented by hardware, but in many cases, the former is preferred. Based on such understanding, the technical solutions of the present invention essentially, or the part contributing to the prior art may be implemented in the form of a software product. The computer software product is stored in a readable storage medium, for example, a floppy disk, a hard disk, or an optical disk of the computer, and includes several instructions for instructing a computer device (which may be a personal computer, a server, a network device, or the like) to perform the method described in each of the embodiments of the present invention.

The foregoing description is merely about the specific embodiments of the present invention, but is not intended to limit the protection scope of the present invention. Any variation or replacement readily figured out by persons skilled in the art within the technical scope disclosed by the present invention shall fall within the protection scope of the present invention. Therefore, the protection scope of the present invention shall be subject to the protection scope of the claims.

## Claims

1. A tri-level inverter, comprising: a first direct current source (BUS1) and a second direct current source (BUS2), wherein a joint where a negative terminal of the first direct current source (BUS1) and a positive terminal of the second direct current source (BUS2) are connected is used as a first node (N); a first switch tube (Q1), a second switch tube (Q2), a third switch tube (Q3), and a fourth switch tube (Q4) that are sequentially connected in series between a positive terminal of the first direct current source (BUS1) and a negative terminal of the second direct current source (BUS2), wherein a joint where the first switch tube (Q1) and the second switch tube (Q2) are connected is a second node (B), a joint where the second switch tube (Q2) and the third switch tube (Q3) are connected is a third node (O), and a joint where the third switch tube (Q3) and the fourth switch tube (Q4) are connected is a fourth node (D); a first diode (D1), wherein the anode of the first diode (D1) is connected to the first node (N), and the cathode of the first diode (D1) is connected to the second node (B); a second diode (D2), wherein the cathode of the second diode (D2) is connected to the first node (N), and the anode of the second diode (D2) is connected to the fourth node (D);
a filter unit (1), wherein two ends of the filter unit (1) are connected to the first node (N) and the third node (O), respectively;
**characterized in that**, the tri-level inverter further comprises:
a fifth switch tube (Q5), wherein the fifth switch tube (Q5) is directly connected between the second node (B) and the fourth node (D).

2. The tri-level inverter according to claim 1, wherein
the filter unit (1) comprises an inductor and a capacitor, wherein one end of the inductor is connected to the third node (O), one end of the capacitor is connected to the other end of the inductor, and the other end of the capacitor is connected to the first node (N).

3. The tri-level inverter according to claim 1 or 2, wherein
the fifth switch tube (Q5) is a field effect transistor.

4. The tri-level inverter according to claim 3, wherein
the field effect transistor is a MOSFET.

5. The tri-level inverter according to claim 1 or 2, wherein
the fifth switch tube (Q5) is a bipolar transistor.

6. The tri-level inverter according to claim 5, wherein
the bipolar transistor is an IGBT.

7. The tri-level inverter according to claim 6, further comprising:
an anti-parallel diode (D3) connected between the emitter and the collector of the fifth switch tube (Q5).

## Patentansprüche

1. Dreistufiger Wechselrichter, der Folgendes umfasst: eine erste Gleichstromquelle (BUS1) und eine zweite Gleichstromquelle (BUS2), wobei eine Verbindungsstelle, an der ein negativer Anschluss der ersten Gleichstromquelle (BUS1) und ein positiver Anschluss der zweiten Gleichstromquelle (BUS2) verbunden sind, als ein erster Knoten (N) verwendet wird; eine erste Schaltröhre (Q1), eine zweite Schaltröhre (Q2), eine dritte Schaltröhre (Q3) und eine vierte Schaltröhre (Q4), die sequenziell zwischen einem positiven Anschluss der ersten Gleichstromquelle (BUS1) und einem negativen Anschluss der zweiten Gleichstromquelle (BUS2) in Reihe verbunden sind, wobei eine Verbindungsstelle, an der die erste Schaltröhre (Q1) und die zweite Schaltröhre (Q2) verbunden sind, ein zweiter Knoten (B) ist, eine Verbindungsstelle, an der die zweite Schaltröhre (Q2) und die dritte Schaltröhre (Q3) verbunden sind, ein dritter Knoten (O) ist, und eine Verbindungsstelle, an der die dritte Schaltröhre (Q3) und die vierte Schaltröhre (Q4) verbunden sind, ein vierter Knoten (D) ist; eine erste Diode (D1), wobei die Anode der ersten Diode (D1) mit dem ersten Knoten (N) verbunden ist und die Kathode der ersten Diode (D1) mit dem zweiten Knoten (B) verbunden ist; eine zweite Diode (D2), wobei die Kathode der zweiten Diode (D2) mit dem ersten Knoten (N) verbunden ist und die Anode der zweiten Diode (D2) mit dem vierten Knoten (D) verbunden ist;
eine Filtereinheit (1), wobei zwei Enden der Filtereinheit (1) mit dem ersten Knoten (N) bzw. dem dritten Knoten (O) verbunden sind;
**dadurch gekennzeichnet, dass** der dreistufige Wechselrichter ferner Folgendes umfasst:
eine fünfte Schaltröhre (Q5), wobei die fünfte Schaltröhre (Q5) direkt zwischen dem zweiten Knoten (B) und dem vierten Knoten (D) verbunden ist.

2. Dreistufiger Wechselrichter nach Anspruch 1, wobei
die Filtereinheit (1) eine Induktivität und einen Kondensator umfasst, wobei ein Ende der Induktivität mit dem dritten Knoten (O) verbunden ist, ein Ende des Kondensators mit dem anderen Ende der Induktivität verbunden ist und das andere Ende des Kondensators mit dem ersten Knoten (N) verbunden ist.

3. Dreistufiger Wechselrichter nach Anspruch 1 und 2, wobei
die fünfte Schaltröhre (Q5) ein Feldeffekttransistor ist.

4. Dreistufiger Wechselrichter nach Anspruch 3, wobei
der Feldeffekttransistor ein MOSFET ist.

5. Dreistufiger Wechselrichter nach Anspruch 1 oder 2, wobei die fünfte Schaltröhre (Q5) ein Bipolartransistor ist.

6. Dreistufiger Wechselrichter nach Anspruch 5, wobei
der Bipolartransistor ein IGBT ist.

7. Dreistufiger Wechselrichter nach Anspruch 6, der ferner Folgendes umfasst:
eine antiparallele Diode (D3), die zwischen dem Emitter und dem Kollektor der fünften Schaltröhre (Q5) verbunden ist.

## Revendications

1. Onduleur à trois niveaux, comprenant : une première source de courant continu (BUS1) et une deuxième source de courant continu (BUS2), une jonction où une borne négative de la première source de courant continu (BUS1) et une borne positive de la deuxième source de courant continu (BUS2) sont branchées étant utilisée comme un premier noeud (N) ; un premier tube commutateur (Q1), un deuxième tube commutateur (Q2), un troisième tube commutateur (Q3) et un quatrième tube commutateur (Q4) qui sont successivement branchés en série entre une borne positive de la première source de courant continu (BUS1) et une borne négative de la deuxième source de courant continu (BUS2), une jonction où le premier tube commutateur (Q1) et le deuxième tube commutateur (Q2) sont branchés étant un deuxième noeud (B), une jonction où le deuxième tube commutateur (Q2) et le troisième tube commutateur (Q3) sont branchés étant un troisième noeud (O), et une jonction où le troisième tube commutateur (Q3) et le quatrième tube commutateur (Q4) sont branchés étant un quatrième noeud (D) ; une première diode (D1), l'anode de la première diode (D1) étant branchée au premier noeud (N), et la cathode de la première diode (D1) étant branchée au deuxième noeud (B) ; une deuxième diode (D2), la cathode de la deuxième diode (D2) étant branchée au premier noeud (N), et l'anode de la deuxième diode (D2) étant branchée au quatrième noeud (D) ;
une unité de filtrage (1), deux extrémités de l'unité de filtrage (1) étant branchées au premier noeud (N) et au troisième noeud (O), respectivement ;
**caractérisé en ce que** l'onduleur à trois niveaux comprend en outre :
un cinquième tube commutateur (Q5), le cinquième tube commutateur (Q5) étant directement branché entre le deuxième noeud (B) et le quatrième noeud (D).

2. Onduleur à trois niveaux selon la revendication 1, dans lequel
l'unité de filtrage (1) comprend une bobine d'induction et un condensateur, une extrémité de la bobine d'induction étant branchée au troisième noeud (O), une extrémité du condensateur étant branchée à l'autre extrémité de la bobine d'induction, et l'autre extrémité du condensateur étant branchée au premier noeud (N).

3. Onduleur à trois niveaux selon la revendication 1 ou 2, dans lequel
le cinquième tube commutateur (Q5) est un transistor à effet de champ.

4. Onduleur à trois niveaux selon la revendication 3, dans lequel
le transistor à effet de champ est un MOSFET.

5. Onduleur à trois niveaux selon la revendication 1 ou 2, dans lequel
le cinquième tube commutateur (Q5) est un transistor bipolaire.

6. Onduleur à trois niveaux selon la revendication 5, dans lequel
le transistor bipolaire est un IGBT.

7. Onduleur à trois niveaux selon la revendication 6, comprenant en outre :
une diode antiparallèle (D3) branchée entre l'émetteur et le collecteur du cinquième tube commutateur (Q5).
